# EUROPÄISCHE PATENTSCHRIFT

(11) **EP 2 199 344 B1**
(45) Veröffentlichungstag und Bekanntmachung des Hinweises auf die Patenterteilung: **21.03.2018**
(21) Anmeldenummer: 08171986.6
(22) Anmeldetag: 17.12.2008
(51) Int. Cl.: C08L 77/06

(54) **Xylylenbasierte Polyamide und deren Verwendung**
Xylylene-based polyamides and their use
Polyamides à base de xylylène et leur utilisation

(43) Veröffentlichungstag der Anmeldung: 23.06.2010
(73) Patentinhaber: EMS-PATENT AG, 7013 Domat/Ems (CH)
(72) Erfinder: Pfleghar Mark, 7013 Domat/Ems (CH); Hoffmann Botho, 7013 Domat/Ems (CH); Presenz Ulrich, 7014 Trin (CH)
(74) Vertreter: Bremi, Tobias Hans

(56) Entgegenhaltungen:
- EP-A1- 0 545 354
- EP-A2- 0 355 017
- EP-A2- 1 777 246
- EP-A2- 1 832 573
- WO-A1-96/25261
- JP-A- S5 080 392
- JP-A- S5 114 998
- US-A- 3 803 102
- US-A- 5 002 988

## Beschreibung

### TECHNISCHES GEBIET

Die vorliegende Erfindung betrifft neue Polyamid-Zusammensetzungen mit wenigstens einem Polyamid auf Basis von m-Xylylendiamin und mindestens einer Disäure in Form einer dimeren Fettsäure. Des Weiteren betrifft sie Verwendungen solcher Zusammensetzungen insbesondere als polymerer Weichmacher, Schmelzkleber, Beschichtung, Dichtung oder Haftvermittler.

### STAND DER TECHNIK

Polyamide werden wegen der guten Verarbeitbarkeit, Formstabilität und der vielseitigen weiteren Eigenschaften in unterschiedlichsten Gebieten eingesetzt. So unter anderem auch im Zusammenhang mit Klebstoffen.

So beschreibt beispielsweise DE 3940119 Klebstoffkompositionen, enthaltend ein thermoplastisches Polyamid (I) mit einer polymeren Fettsäure, mit einem Schmelz- bzw. Erweichungspunkt oberhalb von 210°C und einer bestimmten Schmelzviskosität und einem bestimmten mittleren Molekulargewicht, mit einer oder mehreren Bisphenol-Verbindungen. Die vorgeschlagenen Verbindungen sind angeblich gegenüber bekannten Polyamid-Klebern hinsichtlich Adhäsion und hinsichtlich Alterungsstabilität überlegen. Es wird darauf hingewiesen, dass die Polyamide (I) allein als Kleber ungeeignet sind und erst durch die Kombination respektive Mischung mit dem Bisphenol die vorteilhaften Eigenschaften entstehen.

Aus dem Gebiet der Heisskleber offenbart die US 4218351 Polyamide, welche einerseits auf Dimer-Säuren beruhen und andererseits auf kurzkettigen Dicarboxylsäuren sowie kurzkettigen Diaminen. Unter anderem werden im Zusammenhang mit den Dimer-Säuren Fettsäure-Dimere beschrieben, welche in Kombination mit Sebacinsäure, Piperazin und Polyoxypropylen umgesetzt werden. Hier können die vorgeschlagenen Polyamide entweder allein als Heisskleber oder als Additive für unterschiedlichste Anwendungen wie beispielsweise Weichmacher, Pigmente, Farbstoffe etc. eingesetzt werden.

Generell aus dem Bereich der Materialien beispielsweise zur Herstellung von Isolationen für elektrische Leitungen beschreibt die EP 1533331 Polyamide, welche auf Basis von Dimer-Aminen, auf Basis von Alkyl-Diaminen, auf Basis von Polyalkyl-Diaminen und auf Basis von Fettsäure-Dimeren beruhen. Die Materialien zeichnen sich durch eine hohe Wasserdichtigkeit aus, welcher aber stark von der Anwesenheit der Dimer-Amine bestimmt und von dieser abhängig ist.

Aus der EP-A-0 545 354 aus dem Gebiet der Beschichtungsmaterialien sind EpoxidHarz-Formulierungen bekannt, bei welchen als oligomere Vorstufe MXD mit einer dimeren Fettsäure reagiert wird und anschliessend mit einem Bisphenol zu einem Epoxid in Dispersion verarbeitet wird.

Aus der EP-A-0 355 017 ist ein Block-Copolyamid bekannt, bei welchem als oligomere Vorstufe MXD mit einer dimeren Fettsäure reagiert wird und diese anschliessend mit einem Lactam zum Block-Copolyamid umgesetzt wird.

Aus den Dokumenten EP-A-1 777 246 und EP-A-1 832 573 sind Polyamide zur Rheologiesteuerung bekannt, bei deren Herstellung eine oligomere Vorstufe MXD mit einer dimeren Fettsäure ebenfalls mit Capolactam zu einem Block-Copolyamid umgesetzt wird.

### DARSTELLUNG DER ERFINDUNG

Es ist u.a. Aufgabe der vorliegenden Erfindung, neue, auf m-Xylylendiamin basierende Polyamide oder statistische Copolyamide oder Blends enthaltend solche Polyamide vorzuschlagen, welche insbesondere ein gutes Rückstellverhalten aufweisen, aber auch hinsichtlich weiterer Eigenschaften vorteilhaft eingestellt werden können.

Die Lösung u.a. dieser Aufgabe wird dadurch erreicht, dass eine Polyamid-Zusammensetzung vorgeschlagen wird, welche gekennzeichnet ist durch wenigstens ein Polyamid auf Basis von m-Xylylendiamin und einer Disäure in Form einer dimeren Fettsäure gemäss Anspruch 1. Optional können weitere aliphatische oder cycloaliphatische Diamine und/oder aliphatische oder cycloaliphatische Disäuren vorhanden sein.

Dabei liegt der Anteil an m-Xylylendiamin im Bereich von 50-100 Mol-%, der Anteil an dimerer Fettsäure im Bereich von 30-100 Mol-%.

Die Anteile an weiteren aliphatischen oder cycloaliphatischen Diaminen liegen im Bereich von 0-50 Mol-% und die Anteile an weiteren aliphatischen oder cycloaliphatischen Disäuren im Bereich von 0-70 Mol-%.

Generell gelten die angegebenen Zahlenwerte mit der Massgabe, dass sich die Diamine (Summe aus m-Xylylendiamin und weiteren Diaminen) und die Disäuren (Summe aus dimerer Fettsäure und weiteren Disäuren) auf jeweils 100 Mol-% ergänzen.

Bei der vorgeschlagenen Polyamid-Zusammensetzung handelt es sich um ein Homopolyamid bzw. um statistische Copolyamide. Sie umfasst somit im wesentlichen keine Blockcopolyamide.

Insbesondere zählen Laktam und aromatische Monomere nicht zu den Ausgangsmaterialien, welche als wesentliche Basis der erfindungsgemässen Polyamid-Zusammensetzung dienen, das heisst die Polyamid-Zusammensetzung ist im wesentlichen frei von Laktam und aromatischen Monomeren, respektive wird ohne Verwendung dieser Monomere hergestellt.

Unter einem aromatischen Monomeren ist im Zusammenhang dieser Anmeldung ein Monomer zu verstehen, welches zwei reaktive Gruppen aufweist, wovon wenigstens eine der reaktiven Gruppen eine Aminogruppe und/oder wenigstens eine der reaktiven Gruppen eine Carbonsäuregruppe ist, die direkt an einen aromatischen Kern gebunden ist. Ein Monomer, welches hingegen einen aromatischen Kern aufweist, bei welchem aber alle reaktiven Aminogruppen und/oder reaktiven Carbonsäuregruppen indirekt, z.B. über eine Alkylkette, an diesen Kern angebunden ist, ist kein aromatisches Monomer im Sinne dieser Erfindung. m-Xylylendiamin zum Beispiel ist also kein aromatisches Monomer so wie dieser Begriff im Sinne dieser Anmeldung zu verstehen sein soll. Terephthalsäure oder Isophthalsäure hingegen sind aromatische Monomere im Sinne dieser Beschreibung.

Ausserdem enthält sie weder Polyether- noch Polyesterblöcke, das heisst, sie ist im wesentlichen frei von Polyether- und/oder Polyesterblöcken.

Aufgrund dieser fehlenden Monomere ist die vorgeschlagene Polyamid-Zusammensetzung u.a. einfacher herstellbar, das heisst zum Beispiel bei tieferen Temperaturen bzw. in einer Stufe.

Die vorgeschlagene Polyamid-Zusammensetzung verfügt über ein hervorragendes Rückstellverhalten, ist weich und besitzt eine gute Haftung. In einer bevorzugten Ausführungsform ist die Polyamid-Zusammensetzung ausserdem transparent.

Gemäss der Erfindung verfügt die Polyamid-Zusammensetzung über ein hervorragendes Rückstellverhalten, charakterisiert durch eine Resthöhe von weniger als 50 mm, bevorzugt von weniger als 30 mm, insbesondere bevorzugt von weniger als 20 mm.

Bevorzugtermassen verfügt die Polyamid-Zusammensetzung über eine Weichheit in einem bestimmten Bereich, namentlich über einen Shore-A-Wert im Bereich von 45-98, vorzugsweise im Bereich von 45-95, insbesondere bevorzugt im Bereich von 50-90, ganz besonders bevorzugt 50 - 85.

Insbesondere bevorzugt verfügt die Polyamid-Zusammensetzung über einen Glasübergangspunkt in einem bestimmten Bereich namentlich im Bereich von 0-90°C, bevorzugt im Bereich von 4-70°C, besonders bevorzugt im Bereich von 6-45°C, insbesondere bevorzugt im Bereich von 8-35°C.

Weiterhin bevorzugtermassen verfügt die Polyamid-Zusammensetzung über einen Schmelzpunkt in einem bestimmten Bereich, namentlich über einen Schmelzpunkt im Bereich von 50-240°C, bevorzugt im Bereich von 50-160°C, insbesondere bevorzugt im Bereich von 50-130°C, ganz besonders bevorzugt im Bereich von 50-120°C.

Des Weiteren verfügt Die vorgeschlagene Polyamid-Zusammensetzung bevorzugtermassen über eine gute Haftung. Haftung ist dabei typischerweise so zu verstehen, dass die Haftkraft, gemessen nach DIN 54310, gross ist, vorzugsweise grösser oder gleich ist als 15 N/50mm, insbesondere bevorzugt grösser gleich 18 N/50mm, besonders bevorzugt grösser gleich 25 N/50mm, ganz besonders bevorzugt grösser gleich 30 N/50mm.

Die vorgeschlagene Polyamid-Zusammensetzung kann in einem Mehrkomponenten-Spritzgussverfahren verarbeitet werden.

Beim Mehrkomponenten-Spritzgussverfahren wird nach dem Erstarren der ersten Komponente (Trägermaterial) im Werkzeug die Kavität vergrössert und die nächste Komponente mit dem zweiten Spritzaggregat angespritzt. Für weitere Komponenten wird wiederum die Kavität vergrössert und mit einem weiteren Spritzaggregat die nächste Komponente angespritzt. Die Vergrösserung kann entweder durch Schieber (Core-Back Technik) oder durch Wechsel der Kavität mittels Drehwerkzeug oder Drehtisch oder durch Einlegen des gefertigten Teils in eine andere Kavität des selben oder eines anderen Werkzeugs bewirkt werden. Mit diesem Verfahren kann eine zweite Komponente, z.B. durch dem mehrfachen Wechsel der Kavität, auch an verschiedenen Stellen des Teils aus dem Trägermaterial angespritzt werden. An den verschiedenen Stellen kann die zweite Komponente auch verschiedene Funktionen übernehmen, wie z.B. Dichten oder einen guten, angenehmen Griff (Haptik) erzeugen.

Gemäss einer ersten bevorzugten Ausführungsform ist die Polyamid-Zusammensetzung dadurch gekennzeichnet, dass die dimere Fettsäure zumindestens teilweise, bevorzugt vollständig gesättigt ist und im Bereich von 30-50 Kohlenstoffatome aufweist, vorzugsweise 36 und/oder 44 Kohlenstoffatome. Die dimere Fettsäure weist vorzugsweise eine Säurezahl im Bereich von 145-210 mg KOH/g, weiter bevorzugt im Bereich von 192-200 mg KOH/g auf. Ihr Gehalt an monofunktioneller Säure beträgt bevorzugt maximal 5 %, an difunktioneller Säure mindestens 92 % und an trifunktioneller Säure maximal 4 %. Die Säurezahl bzw. der Gehalt der den verschiedenen Säuren wird gemessen nach AOCS Te 1a-64 bzw. AOCS Tf 5-91. In Frage kommen beispielsweise Produkte, wie sie unter dem Markennamen Pripol von Croda (ehemals Uniqema) insbesondere Pripol 1013, 1012, 1009, 1006 oder Pripol 1004 (mit 44 Kohlenstoffatomen) oder unter dem Markennamen Empol von Cognis insbesondere Empol 1012, 1016, oder 1062 erhältlich sind.

Gemäss einer weiteren bevorzugten Ausführungsform ist die Polyamid-Zusammensetzung dadurch gekennzeichnet, dass der Anteil an m-Xylylendiamin im Bereich von 70-100 Mol-%, bevorzugt im Bereich von 80-100 Mol-%, insbesondere bevorzugt im Bereich von 90-100 Mol-% liegt. Mit anderen Worten ist vorzugsweise der Anteil an m-Xylylendiamin sehr hoch. Ganz besonders bevorzugt beträgt der Anteil an m-Xylylendiamin im wesentlichen 100 Mol-%.

Bevorzugtermassen ist die Polyamid-Zusammensetzung, dadurch gekennzeichnet, dass der Anteil an dimerer Fettsäure im Bereich von 40-100 Mol-%, bevorzugt im Bereich von 60 -100 Mol-%, besonders bevorzugt im Bereich von 70-100 Mol-%, insbesondere bevorzugt im Bereich von 80-100 Mol-%, ganz besonders bevorzugt im Bereich von 86-100 Mol-% liegt.

Gemäss einer weiteren bevorzugten Ausfuhrungsform liegen die Anteile an weiteren aliphatischen oder cycloaliphatischen Diaminen im Bereich von 0-30 Mol-%, bevorzugt im Bereich von 0-20 Mol-%, insbesondere bevorzugt im Bereich von 0-10 Mol-% und die Anteile an weiteren aliphatischen oder cycloaliphatischen Disäuren im Bereich von 0-60 Mol-%, bevorzugt im Bereich von 0-40 Mol-%, insbesondere bevorzugt im Bereich von 0-30 Mol-%, ganz besonders bevorzugt im Bereich von 0-20 Mol-%, noch mehr bevorzugt im Bereich von 0-14 Mol-%.

Die weiteren aliphatischen oder cycloaliphatischen Diamine sind generell ausgewählt aus folgender Gruppe: Trimethylhexamethylendiamin, Nonandiamin, Decandiamin, Undecandiamin, Dodecandiamin, Bis(aminocyclohexyl)methan und seine Alkylderivate, Bis(aminocyclohexyl)propan und seine Alkylderivate, Isophorondiamin, Norbornandiamin, Bis(aminomethyl)norbornan, Cyclohexandiamin, Bis(aminomethyl)cyclohexan und seine Alkylderivate respektive Kombinationen oder Mischungen davon, bevorzugt aus folgender Gruppe: Nonandiamin, Decandiamin, Dodecandiamin, Bis(4-aminocyclohexyl)methan (PACM), Bis(3-methyl-4-aminocyclohexyl)methan (MACM), 1,3-Bis(aminomethyl)cyclohexan (1,3-BAC), Cyclohexandiamin, respektive Kombinationen oder Mischungen davon.

Die weiteren aliphatischen oder cycloaliphatischen Disäuren können generell ausgewählt sein aus der Gruppe: Adipinsäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Cyclohexandicarbonsäure respektive Kombinationen oder Mischungen davon. Durch den Einsatz von weiteren, z.B. kurzkettigen Disäuren kann die Glasübergangstemperatur und die Härte angehoben werden, sofern dies für spezifische Anwendungen gewünscht ist, typischerweise was die Glasübergangstemperatur angeht auf Werte von bis zu 90 °C. Mit anderen Worten lassen sich durch die spezifische Einstellung des Anteils und durch die spezifische Auswahl dieser weiteren Disäuren bzw. Diaminen die endgültigen Eigenschaften der Polyamid-Zusammensetzung sehr angenehm und in grossen Bereichen für die gewünschte Anwendung einstellen.

Gemäss einer weiteren bevorzugten Ausführungsform liegt der Anteil an dimerer Fettsäure im Bereich von 60-100 Mol-% und der Anteil an weiteren aliphatischen oder cycloaliphatischen Disäuren im Bereich von 0-40 Mol-%, wobei es sich vorzugsweise bei der weiteren Disäure um eine Disäure ausgewählt aus der Gruppe Adipinsäure, Azelainsäure, Sebazinsäure, Dodecandisäure, Tetradecandisäure, Octadecandisäure, Cyclohexandicarbonsäure oder eine Mischung respektive Kombination davon handelt.

Gemäss einer weiteren bevorzugten Ausführungsform liegt der Anteil an dimerer Fettsäure im Bereich von 80-100 Mol-% und der Anteil an weiteren aliphatischen oder cycloaliphatischen Disäuren im Bereich von 0-20 Mol-%, wobei es sich vorzugsweise bei der weiteren Disäure um eine Disäure ausgewählt aus der Gruppe Adipinsäure, Azelainsäure, Sebazinsäure, Dodecandisäure, Tetradecandisäure, Octadecandisäure, Cyclohexandicarbonsäure oder eine Mischung respektive Kombination davon handelt.

Gemäss einer weiteren bevorzugten Ausführungsform liegt der Anteil an dimerer Fettsäure im Bereich von 86-100 Mol-% und der Anteil an weiteren aliphatischen oder cycloaliphatischen Disäuren im Bereich von 0-14 Mol-%, wobei es sich vorzugsweise bei der weiteren Disäure um eine Disäure ausgewählt aus der Gruppe Adipinsäure, Azelainsäure, Sebazinsäure, Dodecandisäure, Tetradecandisäure, Octadecandisäure, Cyclohexandicarbonsäure oder eine Mischung respektive Kombination davon handelt.

Gemäss einer weiteren bevorzugten Ausführungsform liegt der Anteil an dimerer Fettsäure im Bereich von 86-100 Mol-% und der Anteil an weiteren aliphatischen oder cycloaliphatischen Disäuren im Bereich von 0-14 Mol-%, wobei es sich vorzugsweise bei der weiteren Disäure um eine Disäure ausgewählt aus der Gruppe Azelainsäure, Sebazinsäure, Dodecandisäure, Tetradecandisäure, 1,3-Cyclohexandicarbonsäure, 1,4-Cyclohexandicarbonsäure (CHD) oder eine Mischung respektive Kombination davon handelt und der Anteil an m-Xylylendiamin 100 Mol-% beträgt.

Gemäss einer weiteren bevorzugten Ausführungsform liegt der Anteil an dimerer Fettsäure im Bereich von 86-94 Mol-% und der Anteil an weiteren aliphatischen oder cycloaliphatischen Disäuren im Bereich von 6-14 Mol-%, wobei es sich vorzugsweise bei der weiteren Disäure um eine Disäure ausgewählt aus der Gruppe Azelainsäure, Sebazinsäure, Dodecandisäure oder eine Mischung respektive Kombination davon handelt und der Anteil an m-Xylylendiamin im Bereich von 70-100 Mol-% und der Anteil an weiteren aliphatischen oder cycloaliphatischen Diaminen im Bereich von 0-30 Mol-% liegt, wobei es sich vorzugsweise bei dem weiteren Diamin um ein Diamin ausgewählt aus der Gruppe Nonandiamin, Decandiamin, Dodecandiamin, Bis(4-aminocyclohexyl)methan (PACM), Bis(3-methyl-4-aminocyclohexyl)methan (MACM), 1,3-Bis(aminomethyl)cyclohexan (1,3-BAC), Cyclohexandiamin, respektive Kombinationen oder Mischungen davon (wobei Decandiamin, Bis(3-methyl-4-aminocyclohexyl)methan (MACM), 1,3-Bis(aminomethyl)cyclohexan (1,3-BAC), bevorzugt sind) handelt. Bevorzugtermassen findet die Ausfuhrungsform aber auch Anwendung bei einem Anteil von m-Xylylendiamin von im wesentlichen 100 Mol-%.

Gemäss einer weiteren bevorzugten Ausführungsform liegt der Anteil an dimerer Fettsäure im Bereich von 50-70 Mol-%, bevorzugtermassen im Bereich von 60 Mol-%, und der Anteil an weiteren aliphatischen oder cycloaliphatischen Disäuren im Bereich von 30-50 Mol-%, bevorzugtermassen im Bereich von 40 Mol-%, wobei es sich vorzugsweise bei der weiteren Disäure um eine Disäure ausgewählt aus der Gruppe Adipinsäure, Azelainsäure, Sebazinsäure, Dodecandisäure, Tetradecandisäure, 1,3-Cyclohexandicarbonsäure, 1,4-Cyclohexandicarbonsäure (CHD) oder eine Mischung respektive Kombination davon handelt, und der Anteil an m-Xylylendiamin bevorzugtermassen wenigstens 80 Mol-% ausmacht, insbesondere bevorzugtermassen wenigstens 90 Mol-%, ergänzt auf 100 Mol-% beispielsweise durch ein aliphatischesoder cycloaliphatisches Diamin wie Nonandiamin, Decandiamin, Dodecandiamin, Bis(4-aminocyclohexyl)methan (PACM), Bis(3-methyl-4-aminocyclohexyl)methan (MACM), 1,3-Bis(aminomethyl)cyclohexan (1,3-BAC), Cyclohexandiamin oder eine Mischung respektive Kombination davon (wobei Decandiamin Bis(3-methyl-4-aminocyclohexyl)methan (MACM), 1,3-Bis(aminomethyl)cyclohexan (1,3-BAC), bevorzugt sind). Bevorzugtermassen findet die Ausführungsform aber auch Anwendung bei einem Anteil von m-Xylylendiamin von im wesentlichen 100 Mol-%.

Gemäss einer weiteren bevorzugten Ausführungsform besteht die Polyamid-Zusammensetzung im wesentlichen ausschliesslich aus dem Polyamid auf Basis von m-Xylylendiamin und einer Disäure in Form einer dimeren Fettsäure, sowie optional weiteren aliphatischen oder cycloaliphatischen Diaminen und/oder aliphatischen oder cycloaliphatischen Disäuren, abgesehen von geringen Anteilen von typischerweise bis zu maximal 20 Gew.-% von üblichen Zusatzstoffen.

Der Polyamid-Zusammensetzung können bevorzugt 0,1 bis 15 Gew.-%, besonders bevorzugt 0,1 bis 6 Gew.-%, ganz besonders bevorzugt 0,1 bis 4 Gew.-% Zusatzstoffe hinzugefügt werden.

In einer weiteren ganz besonders bevorzugten Ausführungsform können der Polyamid-Zusammensetzung 0,1 bis 4 Gew.-% Zusatzstoffe hinzugefügt werden, wobei die Menge jedes einzelnen Zusatzstoffes maximal 3 Gew.-% beträgt.

Der Zusatzstoff ist ausgewählt aus der Gruppe bestehend aus anorganischen Stabilisatoren, organischen Stabilisatoren, Gleitmitteln, Farb- und Markierungstoffen, anorganischen Pigmenten, organischen Pigmenten, Antistatika, Antiblockmitteln, Trennmittel, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Russ, Graphit, Kohlenstoffnanoröhrchen, Entformungsmitteln, optischen Aufhellern, photochromen Additiven, Weichmachern, Fremdpolymeren, Schlagzähmodifikatoren, Verträglichkeitsvermittlern, halogenhaltigen Flammschutzmitteln, halogenfreien Flammschutzmitteln, metallischen Pigmenten, Metallflittern, metallbeschichteten Partikeln, Füllstoffen, insbesondere nanoskalige Füllstoffen, wie z.B. Mineralen mit einer Partikelgrösse von maximal 100 nm oder unmodifizierte oder modifizierte, natürliche oder synthetische Phyllosilicate oder Mischungen davon.

Als Stabilisatoren bzw. Alterungsschutzmittel können in den erfindungsgemäßen Polyamid-Zusammensetzungen, z.B. Antioxidantien, Antiozonantien, Lichtschutzmittel, UV-Stabilisatoren, UV-Absorber oder UV-Blocker eingesetzt werden.

Als Füllstoffe können teilchenförmige Stoffe verwendet werden, wie z.B. Minerale, Glasflakes, hohle oder kompakte Glaskugeln oder gemahlenes Glas.

Die Füllstoffe können Oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden.

Als Phyllosilicate können in den erfindungsgemäßen Polyamid-Zusammensetzungen, z.B. Kaoline, Serpentine, Talkum, Glimmer, Vermiculite, Muscovite, Illite, Smectite, Saponite, Montmorillonit, Hectorit, Doppelhydroxide oder Gemische davon eingesetzt werden. Die Schichtsilikate können oberflächenbehandelt (modifiziert), aber auch unbehandelt (unmodifiziert) sein.

Als Antistatika können in den erfindungsgemässen Polyamid-Zusammensetzungen zum Beispiel Russ und/oder Kohlenstoffnanoröhrchen, auch Kohlenstoffnanofibrillen genannt, eingesetzt werden.

Die Verwendung von Russ kann aber auch der Verbesserung der Schwarzfärbung der Polyamid-Zusammensetzungen dienen.

Die Polyamid-Zusammensetzung kann auch mit anderen Polyamiden geblendet werden. Als Blendkomponente kann ein oder können mehrere Polymere aus der Gruppe bestehend aus PA 6, PA 66, PA 69, PA 610, PA 612, PA 614, PA 618, PA 1010, PA 6/66, PA 6/12, PA 11, PA 12, PA 912, PA 1212, PA MXD6/MXDI, PA 6I/6T, Polyesteramide, Polyetheramide, bevorzugt aus der Gruppe enthaltend PA 6, PA 612, PA 614, PA 618, PA 1010, PA 6/66, PA 6/12, PA 11, PA 12, PA MXD6/MXDI, PA 6I/6T, Polyesteramide, Polyetheramide ausgewählt werden.

Das Blend (Polyamidmischung) kann als Dryblend oder Compound vorliegen. Zur Dryblendherstellung werden die getrockneten Granulate und gegebenenfalls weitere Additive (Zusatzstoffe) vermischt. Diese Mischung wird mittels eines Taumelmischers, Röhnradmischers oder Taumeltrockners 10 - 40 Minuten lang homogenisiert. Zur Vermeidung der Feuchtigkeitsaufnahme kann dies unter getrocknetem Schutzgas erfolgen.

Das homogenisierte Dryblend kann vor der Verwendung auch in einem Ein- oder Zweiwellenextruder oder in einem Schneckenkneter bei 160 °C bis 295 °C in schmelzeförmigem Zustand gemischt und anschliessend zu Granulat geformt werden (Compound). Die Mischtemperatur sollte dabei mindestens 30 °C höher liegen, als der höchste Schmelzpunkt der verwendeten Komponenten. Das Granulat muss nach der Compoundierung auf eine maximale Feuchte von 0.1 Gew.-% getrocknet werden.

Das Blend (Polyamidmischung) wird bevorzugt als Compound verwendet.

Des weiteren betrifft die vorliegende Erfindung eine Verwendung einer solchen Polyamid-Zusammensetzung, wie sie oben beschrieben wurde, als Weichmacher für Polymere insbesondere Polyamide. Eine weitere Verwendung ist möglich als Schmelzkleber. Eine andere Verwendung ist möglich als Haftvermittler insbesondere zu Polyamiden, Polyester, Ionomeren oder funktionalisierten Polyolefinen oder Kombinationen davon, oder als Beschichtung von Substraten. Dabei können als Substrate bevorzugtermassen Metalle, Metalldrähte, Glasfasern, Papier, Karton, Textilien oder Kombinationen davon dienen. Mit den vorliegenden Polyamid-Zusammensetzungen wird auch bei hohen Beschichtungsgeschwindigkeiten eine gute Haftung auf dem Substrat erzielt.

Eine weitere besonders bevorzugte Verwendung einer Polyamid-Zusammensetzung, wie sie oben beschrieben wurde, besteht darin, ein solches Material als Dichtung, Tasten, und/oder Griffflächen für elektrische bzw. elektronische Komponenten oder Geräte einzusetzen, z.B. für Kabeldurchführungen, Stecker, Schalter, Sicherungskästen oder Gehäuse, insbesondere für tragbare elektrische bzw. elektronische Geräte, z.B. Pumpen, Handwerkzeuge, Gartengeräte, Lockenstäbe, Haartrockner, Haarschneidegeräte, Rasierapparate, Epiliergeräte, Messgeräte, Infrarotschlüssel, Mobiltelefone, Abspielgeräte, Laptops, Personal Digital Assistants (PDA), Smartphones, Speichermedien (z.B. USB-Sticks) oder Kombinationen davon. Ebenfalls verwendbar ist das vorgeschlagene System generell für Haushaltsgeräte, Sportgeräte, Möbelbestandteile und Ähnliches. Dabei ist es dank der hervorragenden Verarbeitungseigenschaften des vorgeschlagenen Materials möglich, dieses Material in einem Mehrkomponenten-Spritzgussverfahren zu verarbeiten.

Insbesondere bevorzugt wird eine Polyamid-Zusammensetzung, wie sie oben beschrieben wurde als Dichtung, Tasten und/oder Griffflächen für tragbare Komunikationsgeräte, Abspielgeräte, Speichemedien oder Kombinationen davon verwendet. Bevorzugt wird dabei das Gerät mit Dichtung, Tasten und/oder Griffflächen in einem Mehrkomponenten-Spritzgussverfahren, vor allem im 2-Komponenten-Spritzgussverfahren, hergestellt.

Weitere bevorzugte Ausführungsformen der Erfindung sind in den abhängigen Ansprüchen beschrieben.

### WEGE ZUR AUSFÜHRUNG DER ERFINDUNG

Die Herstellung der Polyamid-Zusammensetzungen erfolgt, was die prinzipielle Führung angeht, in an sich bekannter Weise in bekannten rührbaren Druckautoklaven mit einem Vorlagegefäss und einem Reaktionsgefäss:

Im Vorlagegefäss wird deionisiertes Wasser vorgelegt und die Monomere und Additive zugegeben. Danach wird mehrfach mit Stickstoff inertisiert. Unter Rühren wird auf 150 bis 230 °C unter dem sich einstellenden Druck aufgeheizt, um eine homogene Lösung zu erhalten. Diese Lösung wird durch ein Sieb in das Reaktionsgefäss gepumpt und dort auf die gewünschte Reaktionstemperatur von 250 bis 295 °C bei einem Druck von maximal 10 bar, bevorzugt maximal 6 bar aufgeheizt. Der Ansatz wird in der Druckphase für 0.5 bis 4 Stunden auf der Reaktionstemperatur gehalten. In der anschliessenden Entspannungsphase wird der Druck innerhalb von 1 bis 4 Stunden auf atmosphärischen Druck reduziert, wobei die Temperatur leicht sinken kann.

In der folgenden Entgasungsphase wird der Ansatz bei atmosphärischem Druck für 0.5 bis 1.5 Stunden auf einer Temperatur von 250 bis 305 °C gehalten.

Die Polymerschmelze wird in Strangform ausgetragen, im Wasserbad bei 10 bis 80 °C abgekühlt und anschliessend granuliert. Das Granulat wird für 12 - 48 Stunden bei 80 bis 120 °C unter Stickstoff oder im Vakuum auf einen Wassergehalt von unter 0.1 Gew.-% getrocknet.

Die Polyamid-Zusammensetzung hat eine relative Viskosität (gemessen bei 20 °C in 0,5 Gew.-%-iger Lösung in m-Kresol) von 1,45 - 1,95, bevorzugt von 1,50 - 1,90.

Die Einstellung der relativen Viskosität und damit der Molmasse kann z.B. über monofunktionelle Diamine oder Dicarbonsäuren, und/oder difunktionelle Diamine oder Dicarbonsäuren als Kettenregler erfolgen. Bevorzugte Kettenregler für die erfindungsgemässen Copolyamide sind Benzoesäure, Essigsäure oder Triacetondiamin. Solche werden in Konzentrationen von 20 bis 150 Mol pro Tonne Endprodukt, bevorzugt 30 bis 100 Mol pro Tonne Endprodukt, noch mehr bevorzugt 40 bis 80 Mol pro Tonne Endprodukt eingesetzt.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zur Reduktion der Verfärbung während der Verarbeitung führen. Die Katalysatoren werden im Bereich von 0.01 bis 0.5 Gew.-%, bevorzugt 0.03 bis 0.1 Gew.-% zugegeben.

Geeignete Entschäumer zur Vermeidung der Schaumbildung während der Entgasung sind wässrige, 10 %-ige Emulsionen, die Silicone oder Siliconderivate enthalten und in Mengen von 0.01 bis 1.0 Gew.-%, bevorzugt 0.01 bis 0.10 Gew.-% eingesetzt werden.

### Versuchsbeispiele

Im Folgenden wird die Herstellung eines erfindungsgemässen Copolyamids an Hand des in Beispiel Nr. 6 verwendeten Polyamides PA MXD36/MXD12 erläutert, die weiteren Beispiele und Vergleichsbeispiele wurden analog hergestellt:

Im Vorlagegefäss eines 300 1 Druckautoklaven werden 42 kg deionisiertes Wasser vorgelegt und 16 kg Dodecandisäure und 60.1 kg Dimersäure eingerührt. Bei abgestelltem Rührer werden 23.9 kg m-Xylylendiamin und zum Schluss 10 g Essigsäure zugegeben.

Nach 10-maliger Inertisierung wird bis auf 190 °C aufgeheizt, wobei der Rührer nach Erreichen von 180 °C wieder eingeschalten wird. Die homogene Lösung wird bei 190 °C durch ein Sieb in das Reaktiongefäss gepumpt.

Unter Rühren wird dort der Ansatz auf 270 °C aufgeheizt und 1 Stunde bei 10 bar in der Druckphase gehalten. Innerhalb von 2.5 Stunden wird auf atmosphärischen Druck entspannt und anschliessend bei 270 °C 40 Minuten entgast.

Die Polymerschmelze wird ausgetragen, im Wasserbad (20 °C) abgekühlt und granuliert. Das Granulat wird bei 100 °C unter Stickstoff auf einen Wassergehalt von unter 0.1 Gew.-% getrocknet.

Die Prüfkörper werden auf einer Spritzgussmaschine der Firma Arburg, Modell Allrounder 420 C 1000-250 hergestellt. Dabei werden je nach Schmelzpunkt der Polyamid-Zusammensetzung Zylindertemperaturen zwischen 170 und 260 °C verwendet. Die Formtemperatur beträgt 12-20 °C. Bei den Platten für die optischen Messungen werden polierte Formen verwendet.

Die Prüfkörper werden im trockenen Zustand verwendet, dazu werden sie nach dem Spritzguss mindestens 48 h bei Raumtemperatur in trockener Umgebung, d.h. über Silicagel gelagert.

Insgesamt wurden nach diesem Verfahren 30 Beispiele hergestellt und hinsichtlich ihrer Eigenschaften ausgemessen, die entsprechenden Informationen sind in den Tabellen 1-6 zusammengefasst. Zum Vergleich mit den Systemen gemäss Stand der Technik wurden zudem als Beispiele 31-34 vier Vergleichsbeispiele hergestellt und analog ausgemessen.

In den Versuchsbeispielen verwendete Monomere:
m-Xylylendiamin (MXDA), Schmelzpunkt 14 °C, Hersteller Mitsubihi Gas Chemical.
Decandiamin, Schmelzpunkt 61-65 °C, Hersteller Cathay Industrial Biotech.
Bis(3-methyl-4-aminocyclohexyl)methan (MACM), Schmelzpunkt -7 bis -1 °C, Hersteller BASF AG.
Hexamethylendiamin, Schmelzpunkt 41 °C, Hersteller BASF AG.
Dimersäure, Säurezahl 196 mg KOH/g, Handelsname Pripol 1009, Hersteller Croda GmbH.
Adipinsäure, Schmelzpunkt 151-154 °C, Hersteller Du Pont.
Dodecandisäure, Schmelzpunkt 128-130 °C, Hersteller Du Pont.
Sebazinsäure, Schmelzpunkt 131-137 °C, Hersteller Helm AG .
Azelainsäure, Schmelzpunkt 99-103 °C, Hersteller Cognis Corporation.
Tetradecandisäure, Schmelzpunkt 124-128°C, Hersteller Cathay Industrial Biotech.
1,4-Cyclohexandicarbonsäure (CHD), Schmelzpunkt 164-168 °C, Hersteller Eastman Chemical.
Isophthalsäure, Schmelzpunkt 345 bis 348 °C, Sublimationstemperatur 100 °C bei 0.07 mm Quecksilbersäule, Hersteller BP Amoco Chemical..

Zur Prüfung der Polyamid-Zusammensetzungen werden dabei folgende Messvorschriften verwendet.

Relative Viskosität: ISO 307; 0,5 Gew.-%-ige m-Kresollösung; Temperatur 20 °C; Berechnung der relativen Viskosität (RV) nach RV = t/t0 in Anlehnung an Abschnitt 11 der Norm.

Schmelzpunkt und Glasumwandlungstemperatur (Tg): ISO-Norm 11357-1/-2; Granulat; Die Differential Scanning Calorimetry (DSC) wurde mit Aufheizrate von 20 K/min durchgeführt; Beim Schmelzpunkt wird die Temperatur am Peakmaximum, bei der Glasumwandlungstemperatur die Temperatur am Onset angegeben.

Reissfestigkeit: ISO 527 mit einer Zuggeschwindigkeit von 50 mm/min; ISO-Zugstab, Norm: ISO/CD 3167, Typ A1, 170 x 20/10 x 4 mm; Temperatur 23 °C.

Rückstellverhalten: ISO-Zugstab, Norm: ISO/CD 3167, Typ A1, 170 x 20/10 x 4 mm; Temperatur 23 °C; Die beiden Enden des ISO-Zugstab werden so weit um die Mitte des Zugstabes zueinander gebogen, bis sie sich berühren. Nach dem Loslassen der Enden wird der Zugstab mit den Enden auf eine waagrechte, fettfreie Unterlage gestellt. Nach 3 Minuten wird die Resthöhe, das heisst die grösste Entfernung der Zugstaboberkante von der Unterlage gemessen. Diese Messung wird mit jeweils 5 Zugstäben durchgeführt. Angegeben wird der arithmetische Mittelwert der Resthöhe in mm.

Bei der Unterlage handelt es sich um eine Prüfplatte aus Naturhartgestein nach DIN 876/I mit den Massen 400 x 400 x 60 mm und einer Ebenheit von 14 µm.

Shore Härte: ISO 868; ISO-Zugstab, Norm: ISO/CD 3167, Typ A1, 170 x 20/10 x 4 mm; Temperatur 23 °C; Gemessen wird am breiten Teil des Zugstabes; Shore A- und Shore D-Werte können aufgrund der verschiedenen Eindringkörper nicht miteinander korreliert werden.

Lichttransmission und Haze: ASTM D 1003 ; Platten 100 x 100 x 6 mm, bzw. Platten 60 x 60 x 2 mm; Temperatur 23 °C; Messgerät Haze Gard plus der Firma Byk Gardner mit CIE Lichtart C. Der Lichttransmissions- und der Hazewert werden in % der eingestrahlten Lichtmenge angegeben.

Haftkraft: DIN 54310; Folienlaminat Aluminium/Polyamid/Aluminium der Grösse 250 x 200 mm; Dicke der Aluminiumfolie 100 µm; Prüfgeschwindigkeit: 100 mm/min; Prüfstrecke: 100 mm; Temperatur: 25 °C.

**Tabelle 1: Eigenschaften der MXD36 und MXD36/MXD6 - Produkte; rV: relative Viskosität; * maximale Zugkraft (MPa) bei Dehnung bis zum maximalen Hub der Zugmaschine (kein Riss).**

| **Beispiel Nr.** | **1** | **2** | **3** | **4** | **5** | **6** |
|---|---|---|---|---|---|---|
| **Monomere** | | | | | | |
| MXDA (Mol-%) | 100 | 100 | 100 | 100 | 100 | 100 |
| Dimersäure, C36 (Mol-%) | 100 | 90 | 80 | 60 | 40 | 30 |
| Adipinsäure (Mol-%) | - | 10 | 20 | 40 | 60 | 70 |
| | | | | | | |
| **Viskosität** | | | | | | |
| rV (0.5% in m-Kresol) | 1.52 | 1.54 | 1.49 | 1.56 | 1.75 | 1.77 |
| | | | | | | |
| **DSC** | | | | | | |
| Schmelzpunkt (°C) | 62 | 236 | 228 | 229 | 230 | 231 |
| Tg (°C) | 10 | 12 | 15 | 22 | 87 | 87 |
| | | | | | | |
| **Mechanik** | | | | | | |
| Reissfestigkeit (MPa) | 10* | - | 13* | 12 | 13 | 19 |
| | | | | | | |
| Rückstellverhalten (mm) | 4 | 8 | 14 | 11 | 12 | 13 |
| | | | | | | |
| **Härte** | | | | | | |
| Shore A | 55 | 63 | 69 | 75 | 88 | 93 |
| Shore D | - | - | 20 | 25 | 41 | 49 |
| | | | | | | |
| **Optik (6mm Platten)** | | | | | | |
| Lichttransmission (%) | 88 | 53 | 46 | 34 | 24 | 20 |
| | | | | | | |
| **Optik (2mm Platten)** | | | | | | |
| Lichttransmission (%) | 92 | - | - | - | - | - |

**Tabelle 2 Eigenschaften der MXD36/MXD12 - Produkte; rV: relative Viskosität; * maximale Zugkraft (MPa) bei Dehnung bis zum maximalen Hub der Zugmaschine (kein Riss)**

| **Beispiel Nr.** | **7** | **8** | 9 | **10** | **11** |
|---|---|---|---|---|---|
| **Monomere** | | | | | |
| MXDA (Mol-%) | 100 | 100 | 100 | 100 | 100 |
| Dimersäure, C36 (Mol-%) | 90 | 80 | 60 | 33 | 30 |
| Dodecandisäure (Mol-%) | 10 | 20 | 40 | 67 | 70 |
| | | | | | |

| **Viskosität** | | | | | |
|---|---|---|---|---|---|
| rV (0.5% in m-Kresol) | 1.53 | 1.48 | 1.46 | 1.58 | 1.60 |
| | | | | | |
| **DSC** | | | | | |
| Schmelzpunkt (°C) | 98 | 111 | 135 | 152 | 153 |
| Tg (°C) | 10 | 17 | 25 | 33 | 34 |
| | | | | | |

| **Mechanik** | | | | | |
|---|---|---|---|---|---|
| Reissfestigkeit (MPa) | 11* | 12* | 20 | 30 | 31 |
| | | | | | |
| Rückstellverhalten (mm) | 10 | 12 | 7 | 16 | 18 |
| | | | | | |

| **Härte** | | | | | |
|---|---|---|---|---|---|
| Shore A | 65 | 72 | 94 | 99 | 99 |
| Shore D | - | 20 | 49 | 67 | 68 |
| | | | | | |

| **Optik (6mm Platten)** | | | | | |
|---|---|---|---|---|---|
| Lichttransmission (%) | 88 | 85 | 87 | - | - |
| | | | | | |

| **Optik (2mm Platten)** | | | | | |
|---|---|---|---|---|---|
| Lichttransmission (%) | 92 | 90 | - | 84 | - |

**Tabelle 3 Eigenschaften der MXD36/MXD10 - Produkte; rV: relative Viskosität; * maximale Zugkraft (MPa) bei Dehnung bis zum maximalen Hub der Zugmaschine (kein Riss).**

| **Beispiel Nr.** | **12** | **13** | **14** |
|---|---|---|---|
| **Monomere** | | | |
| MXDA (Mol-%) | 100 | 100 | 100 |
| Dimersäure, C36 (Mol-%) | 90 | 80 | 60 |
| Sebazinsäure (Mol-%) | 10 | 20 | 40 |
| | | | |

| **Viskosität** | | | |
|---|---|---|---|
| rV (0.5% in m-Kresol) | 1.50 | 1.45 | 1.52 |
| | | | |

| **DSC** | | | |
|---|---|---|---|
| Schmelzpunkt (°C) | 63 | 64 | 131 |
| Tg (°C) | 11 | 15 | 23 |
| | | | |

| **Mechanik** | | | |
|---|---|---|---|
| Reissfestigkeit (MPa) | 11* | 12* | 26 |
| | | | |
| Rückstellverhalten (mm) | 9 | 11 | 6 |
| | | | |

| **Härte** | | | |
|---|---|---|---|
| Shore A | 70 | 79 | 89 |
| | | | |

| **Optik (2mm Platten)** | | | |
|---|---|---|---|
| Lichttransmission (%) | 94 | 92 | 92 |

**Tabelle 4 Eigenschaften der MXD36/MXD9 - Produkte; rV: relative Viskosität; * maximale Zugkraft (MPa) bei Dehnung bis zum maximalen Hub der Zugmaschine (kein Riss); ** kein Schmelzpunkt vorhanden.**

| **Beispiel Nr.** | **15** | **16** | **17** | **18** | **19** |
|---|---|---|---|---|---|
| **Monomere** | | | | | |
| MXDA (Mol-%) | 100 | 100 | 100 | 100 | 100 |
| Dimersäure, C36 (Mol-%) | 90 | 80 | 60 | 40 | 30 |
| Azelainsäure (Mol-%) | 10 | 20 | 40 | 60 | 70 |
| | | | | | |
| **Viskosität** | | | | | |
| rV (0.5% in m-Kresol) | 1.51 | 1.47 | 1.50 | 1.46 | 1.49 |
| | | | | | |
| **DSC** | | | | | |
| Schmelzpunkt (°C) | 58 | 57 | ** | ** | ** |
| Tg(°C) | 12 | 18 | 25 | 35 | 43 |
| | | | | | |
| **Mechanik** | | | | | |
| Reissfestigkeit (MPa) | 11* | 14* | 29 | 33 | 36 |
| | | | | | |
| Rückstellverhalten (mm) | 10 | 11 | 7 | 13 | 17 |
| | | | | | |
| **Härte** | | | | | |
| Shore A | 64 | 73 | 83 | 89 | 97 |
| | | | | | |

| **Optik (2mm Platten)** | | | | | |
|---|---|---|---|---|---|
| Lichttransmission (%) | 92 | 92 | 91 | 93 | 94 |

**Tabelle 5 Eigenschaften der MXD36/MXD14 - Produkte; rV: relative Viskosität; * maximale Zugkraft (MPa) bei Dehnung bis zum maximalen Hub der Zugmaschine (kein Riss).**

| **Beispiel Nr.** | **20** | **21** | **22** | **23** | **24** |
|---|---|---|---|---|---|
| **Monomere** | | | | | |
| MXDA (Mol-%) | 100 | 100 | 100 | 100 | 100 |
| Dimersäure, C36 (Mol-%) | 90 | 80 | 60 | 40 | 30 |
| Tetradecandisäure (Mol-%) | 10 | 20 | 40 | 60 | 70 |
| | | | | | |

| **Viskosität** | | | | | |
|---|---|---|---|---|---|
| rV (0.5% in m-Kresol) | 1.52 | 1.50 | 1.45 | 1.48 | 1.50 |
| | | | | | |

| **DSC** | | | | | |
|---|---|---|---|---|---|
| Schmelzpunkt (°C) | 87 | 115 | 141 | 153 | 157 |
| Tg (°C) | 11 | 15 | 21 | 31 | 32 |
| | | | | | |

| **Mechanik** | | | | | |
|---|---|---|---|---|---|
| Reissfestigkeit (MPa) | 11* | 13* | 19 | 26 | 30 |
| | | | | | |
| Rückstellverhalten (mm) | 11 | 13 | 9 | - | 19 |
| | | | | | |

| **Härte** | | | | | |
|---|---|---|---|---|---|
| Shore A | 66 | 72 | 84 | 93 | 99 |
| | | | | | |

| **Optik (2mm Platten)** | | | | | |
|---|---|---|---|---|---|
| Lichttransmission (%) | 91 | 90 | - | 87 | - |

**Tabelle 6 Eigenschaften der MXD36/MXD10/1036/1010, MXD36/MACM36 und MXD36/MXDCHD - Produkte; rV: relative Viskosität; * maximale Zugkraft (MPa) bei Dehnung bis zum maximalen Hub der Zugmaschine (kein Riss).**

| **Beispiel Nr.** | **25** | **26** | **27** | **28** | **29** | **30** |
|---|---|---|---|---|---|---|
| **Monomere** | | | | | | |
| MXDA (Mol-%) | 95 | 93 | 87 | 74 | 95 | 100 |
| Decandiamin (Mol-%) | 5 | 7 | 13 | 26 | - | - |
| MACM (Mol-%) | - | - | - | - | 5 | - |
| Dimersäure, C36 (Mol-%) | 90 | 60 | 60 | 60 | 100 | 90 |
| Sebazinsäure (Mol-%) | 10 | 40 | 40 | 40 | - | - |
| 1,4-Cyclohexandicarbonsäure (Mol-%) | - | - | - | - | - | 10 |

| **Viskosität** | | | | | | |
|---|---|---|---|---|---|---|
| rV (0.5% in m-Kresol) | 1.50 | 1.48 | 1.45 | 1.53 | 1.52 | 1.52 |
| | | | | | | |

| **DSC** | | | | | | |
|---|---|---|---|---|---|---|
| Schmelzpunkt (°C) | 62 | 129 | 126 | 114 | 53 | 50 |
| Tg (°C) | 11 | 22 | 21 | 20 | 12 | 14 |
| | | | | | | |

| **Mechanik** | | | | | | |
|---|---|---|---|---|---|---|
| Reissfestigkeit (MPa) | 10* | 25 | 23 | 18* | 11* | 13* |
| | | | | | | |
| Rückstellverhalten (mm) | 8 | 5 | 4 | 4 | 9 | 7 |
| | | | | | | |

| **Härte** | | | | | | |
|---|---|---|---|---|---|---|
| Shore A | 62 | 84 | 81 | 76 | 62 | 68 |
| | | | | | | |

| **Optik (2mm Platten)** | | | | | | |
|---|---|---|---|---|---|---|
| Lichttransmission (%) | 93 | 91 | 92 | 92 | 96 | 95 |

**Tabelle 7 vergleichsbeispiele; rV: relative Viskosität; * zu hart, daher nicht messbar.**

| **Vergleichsbeispiel Nr.** | **31** | **32** | **33** | **34** |
|---|---|---|---|---|
| **Monomere** | | | | |
| MXDA (Mol-%) | 100 | 100 | 55 | 100 |
| Hexamethylendiamin (Mol-%) | - | - | 45 | - |
| Adipinsäure (Mol-%) | 100 | 88 | 80 | - |
| Isophthalsäure (Mol-%) | - | 12 | - | - |
| Sebazinsäure (Mol-%) | - | - | 20 | - |
| Dodecandisäure (Mol-%) | - | - | - | 80 |
| Dimersäure (Mol-%) | - | - | - | 20 |
| | | | | |
| **Viskosität** | | | | |
| rV (0.5% in m-Kresol) | 1.65 | 1.64 | 1.62 | 1.65 |
| | | | | |
| **DSC** | | | | |
| Schmelzpunkt (°C) | 237 | 215 | 182 | 170 |
| Tg (°C) | 85 | 96 | 64 | 39 |
| | | | | |
| **Mechanik** | | | | |
| Reissfestigkeit (MPa) | 99 | 94 | 20 | 35 |
| Rückstellverhalten (mm) | 60 | 78 | 59 | 58 |
| | | | | |
| **Härte** | | | | |
| Shore A | * | * | * | 99 |
| Shore D | 84 | 86 | 80 | 74 |
| | | | | |
| **Optik (2mm Platten)** | | | | |
| Lichttransmission (%) | 94 | 93 | - | 72 |

Aus den Beispielen wird ersichtlich, wie insbesondere das Rückstellverhalten bei den erfindungsgemässen Polyamiden unerwartet hervorragend ist (4-19mm; im Bereich von 4mm, vollständige Rückstellung im gemessenen Zeitfenster) im Vergleich zum Stand der Technik (58-78mm). Hinsichtlich dieser Grösse ergibt sich also ein Unterschied im Rahmen einer Grössenordnung zwischen den Systemen nach dem Stand der Technik und den vorgeschlagenen Systemen. MXDA in einer Kombination mit einer Disäure, die keine Dimerfettsäure ist (vergleiche Vergleichsbeispiel 31 sowie 33) führt zu schlechtem Rückstellverhalten, die Anwesenheit von aromatischen Monomeren (vergleiche Vergleichsbeispiel 32) führt zu einem sehr schlechten Rückstellverhalten, und wenn MXDA mit einem zu niedrigen Anteil von Dimerfettsäure kombiniert wird (Vergleichsbeispiele 34) resultiert ebenfalls ein schlechtes Rückstellverhalten. Tatsächlich zeigt sich unerwarteter Weise, dass bei einem Übergang des Anteils von Dimerfettsäure von 20 % auf die erfindungsgemässen wenigstens 30 % plötzlich eine extreme Verbesserung des Rückstellverhaltens resultiert.

Ebenfalls wird ersichtlich, wie zum Beispiel die Härte auf die Bedürfnisse eingestellt werden kann, und wie zum Teil hervorragende Lichttransmission möglich ist.

## Patentansprüche

1. Polyamid-Zusammensetzung **gekennzeichnet durch** wenigstens ein Polyamid in Form eines Homo-Polyamids oder eines statistischen Copolyamids auf Basis von m-Xylylendiamin und einer Disäure in Form einer dimeren Fettsäure, sowie optional weiteren aliphatischen oder cycloaliphatischen Diaminen und/oder aliphatischen oder cycloaliphatischen Disäuren, wobei
der Anteil an m-Xylylendiamin im Bereich von 50-100 Mol-%,
der Anteil an dimerer Fettsäure im Bereich von 30-100 Mol-% liegt, und
wobei die Anteile an weiteren aliphatischen oder cycloaliphatischen Diaminen im Bereich von 0-50 Mol-% liegen und diese ausgewählt sind aus der Gruppe: Trimethylhexamethylendiamin, Nonandiamin, Decandiamin, Undecandiamin, Dodecandiamin Bis(aminocyclohexyl)methan und seine Alkylderivate, Bis(aminocyclohexyl)propan und seine Alkylderivate, Isophorondiamin, Norbornandiamin, Bis(aminomethyl)norbornan, Cyclohexandiamin, Bis(aminomethyl)cyclohexan und seine Alkylderivate respektive Kombinationen oder Mischungen davon,
und die Anteile an weiteren aliphatischen oder cycloaliphatischen Disäuren im Bereich von 0-70 Mol-% liegen,
mit der Massgabe, dass sich die Diamine und die Disäuren auf jeweils 100 Mol-% ergänzen, sowie
mit der Massgabe, dass das Polyamid nicht auf Basis von Laktamen und/oder aromatischen Monomeren beruht, wobei unter einem aromatischen Monomeren ein Monomer zu verstehen ist, welches zwei reaktive Gruppen aufweist, wovon wenigstens eine der reaktiven Gruppen eine Aminogruppe und/oder wenigstens eine der reaktiven Gruppen eine Carbonsäuregruppe ist, die direkt an einen aromatischen Kern gebunden ist,
und mit der Massgabe, dass das Polyamid frei ist von Polyether- und/oder Polyesterblöcken,
wobei die Polyamid-Zusammensetzung ein Rückstellverhalten, gemessen an einem ISO-Zugstab, Norm: ISO/CD 3167, Typ A1 gemäss Beschreibung, charakterisiert durch eine Resthöhe, von weniger als 50 mm aufweist,
und wobei die Polyamid-Zusammensetzung eine relative Viskosität, gemessen bei 20 °C in 0,5 Gew.-%-iger Lösung in m-Kresol, von 1,45 - 1,95 aufweist.

2. Polyamid-Zusammensetzung nach Anspruch 1, **dadurch gekennzeichnet, dass** die dimere Fettsäure im Bereich von 30-50 Kohlenstoffatome aufweist, vorzugsweise 36 und/oder 44 Kohlenstoffatome, wobei die dimere Fettsäure vorzugsweise zumindest teilweise, insbesondere bevorzugt vollständig gesättigt ist und und/oder wobei sie vorzugsweise eine Säurezahl im Bereich von 145-210 mg KOH/g, weiter bevorzugt im Bereich von 192-200 mg KOH/g aufweist.

3. Polyamid-Zusammensetzung nach einem der vorhergehenden Ansprüche, **dadurch gekennzeichnet, dass** der Anteil an m-Xylylendiamin im Bereich von 70-100 Mol-%, bevorzugt im Bereich von 80-100 Mol-%, insbesondere bevorzugt im Bereich von 90-100 Mol-% liegt.

4. Polyamid-Zusammensetzung nach einem der vorhergehenden Ansprüche, **dadurch gekennzeichnet, dass** der Anteil an dimerer Fettsäure im Bereich von 40-100 Mol-%, bevorzugt im Bereich von 60-100 Mol-%, besonders bevorzugt im Bereich von 70-100 Mol-%, insbesondere bevorzugt im Bereich von 80-100 Mol-% oder von 86- 100 Mol-% liegt.

5. Polyamid-Zusammensetzung nach einem der vorhergehenden Ansprüche, **dadurch gekennzeichnet, dass** der Anteil an m-Xylylendiamin im wesentlichen 100 Mol-% ausmacht.

6. Polyamid-Zusammensetzung nach einem der vorhergehenden Ansprüche, **dadurch gekennzeichnet, dass** der Anteil an dimerer Fettsäure im Bereich von 60-100 Mol-% liegt und der Anteil an weiteren aliphatischen oder cycloaliphatischen Disäuren im Bereich von 0-40 Mol-% liegt, wobei es sich vorzugsweise bei der weiteren Disäure um eine Disäure ausgewählt aus der Gruppe Adipinsäure, Azelainsäure, Sebazinsäure, Dodecandisäure, Tetradecandisäure, Octadecandisäure, Cyclohexandicarbonsäure oder eine Mischung respektive Kombination davon handelt.

7. Polyamid-Zusammensetzung nach einem der vorhergehenden Ansprüche, **dadurch gekennzeichnet, dass** die weiteren aliphatischen oder cycloaliphatischen Disäuren ausgewählt sind aus der Gruppe: Adipinsäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Cyclohexandicarbonsäure respektive Kombinationen oder Mischungen davon.

8. Polyamid-Zusammensetzung nach einem der vorhergehenden Ansprüche, **dadurch gekennzeichnet, dass** sie im wesentlichen ausschliesslich aus dem Polyamid Polyamid auf Basis von m-Xylylendiamin und einer Disäure in Form einer dimeren Fettsäure, sowie optional weiteren aliphatischen oder cycloaliphatischen Diaminen und/oder aliphatischen oder cycloaliphatischen Disäuren besteht, abgesehen von geringen Anteilen von typischerweise maximal 20 Gew.-% von Additiven.

9. Polyamid-Zusammensetzung nach einem der vorhergehenden Ansprüche, **dadurch gekennzeichnet, dass** sie einen Shore-A-Wert im Bereich von 45-98, vorzugsweise im Bereich von 45-95, insbesondere bevorzugt im Bereich von 50-90 aufweist.

10. Polyamid-Zusammensetzung nach einem der vorhergehenden Ansprüche, **dadurch gekennzeichnet, dass** sie einen Schmelzpunkt im Bereich von 50-240°C, bevorzugt im Bereich von 50-160°C, insbesondere bevorzugt im Bereich von 90-130°C aufweist, und/oder dass sie einen Glasübergangspunkt im Bereich von 0-90°C, bevorzugt im Bereich von 4-70°C, besonders bevorzugt im Bereich von 6-45°C, insbesondere bevorzugt im Bereich von 8-35°C aufweist.

11. Polyamid-Zusammensetzung nach einem der vorhergehenden Ansprüche, **dadurch gekennzeichnet, dass** sie ein Rückstellverhalten, charakterisiert durch eine Resthöhe von weniger als 30 mm, bevorzugt von weniger als 20 mm, aufweist.

12. Mischung, bevorzugt in Form eines Dryblends oder eines Compounds, mit wenigstens einer Polyamid-Zusammensetzung nach einem der vorhergehenden Ansprüche, wobei vorzugsweise als weitere Komponente der Mischung eines oder mehrere Polymere ausgewählt aus der Gruppe bestehend aus: PA 6, PA 66, PA 69, PA 610, PA 612, PA 614, PA 618, PA 1010, PA 6/66, PA 6/12, PA 11, PA 12, PA 912, PA 1212, PA MXD6/MXDI, PA 6I/6T, Polyesteramide, Polyetheramide, verwendet werden.

13. Verwendung einer Polyamid-Zusammensetzung oder einer Mischung nach einem der vorhergehenden Ansprüche als Weichmacher für Polymere insbesondere Polyamide, als Schmelzkleber, oder als Haftvermittler insbesondere zu Polyamiden, Polyester, Ionomeren oder funktionalisierten Polyolefinen oder Kombinationen davon, oder als Beschichtung von Substraten, wobei als Substrate bevorzugtermassen Drähte, Glasfasern, Papier, Karton, Textilien oder Kombinationen davon dienen.

14. Verwendung einer Polyamid-Zusammensetzung oder einer Mischung nach einem der Ansprüche 1-11 als Dichtung, Gehäuseelement, Taste und/oder Grifffläche für elektrische bzw. elektronische Komponenten, Gehäuse oder Geräte, insbesondere für tragbare elektrische bzw. elektronische Gehäuse oder Geräte, Sportgeräte respektive Kombinationen davon, bevorzugt Verwendung in einem Mehrkomponenten-Spritzgussverfahren zur Herstellung einer Dichtung, eines Gehäuses, eines Gehäuseelements, einer Taste und/oder einer Grifffläche für eine elektrische beziehungsweise elektronische Komponente, insbesondere für ein Mobiltelefon.

## Claims

1. Polyamide composition **characterized by** at least one polyamide in the form of a homopolyamide or of a random copolyamide based on m-xylylenediamine and on a diacid in the form of a dimeric fatty acid, and also optionally on other aliphatic or cycloaliphatic diamines and/or aliphatic or cycloaliphatic diacids, where
the proportion of m-xylylenediamine is in the range from 50 to 100 mol%,
the proportion of dimeric fatty acid is in the range from 30 to 100 mol%, and
where the proportions of other aliphatic or cycloaliphatic diamines are in the range from 0 to 50 mol%, and these are selected from the group of trimethylhexamethylenediamine, nonanediamine, decanediamine, undecanediamine, dodecanediamine, bis(aminocyclohexyl)methane and its alkyl derivatives, bis(aminocyclohexyl)propane and its alkyl derivatives, isophoronediamine, norbornanediamine, bis(aminomethyl)norbornane, cyclohexanediamine, bis(aminomethyl)cyclohexane and its alkyl derivatives and respective combinations and mixtures thereof,
and the proportions of other aliphatic or cycloaliphatic diacids are in the range from 0 to 70 mol%,
with the proviso that the diamines and the diacids in each case give a total of 100 mol%, and also
with the proviso that the polyamide is not based on lactams and/or on aromatic monomers, where the expression "an aromatic monomer" means a monomer having two reactive groups, where at least one of the reactive groups is an amino group and/or at least one of the reactive groups is a carboxylic acid group, this group having direct bonding to an aromatic ring,
and with the proviso that the polyamide is free from polyether blocks and/or polyester blocks, where the resilience of the polyamide composition, measured on an ISO tensile specimen, standard: ISO/CD 3167, type A1, in accordance with Description, is **characterized by** a residual height of less than 50 mm,
and where the relative viscosity of the polyamide composition, measured at 20°C in 0.5% by weight solution in m-cresol, is from 1.45 to 1.95.

2. Polyamide composition according to Claim 1, **characterized in that** the number of carbon atoms in the dimeric fatty acid is in the range from 30 to 50, preferably being 36 and/or 44, where the dimeric fatty acid is preferably at least partially, with particular preference fully, saturated and/or where the acid number thereof is preferably in the range from 145 to 210 mg KOH/g, more preferably in the range from 192 to 200 mg KOH/g.

3. Polyamide composition according to any of the preceding claims, **characterized in that** the proportion of m-xylylenediamine is in the range from 70 to 100 mol%, preferably in the range from 80 to 100 mol%, with particular preference in the range from 90 to 100 mol%.

4. Polyamide composition according to any of the preceding claims, **characterized in that** the proportion of dimeric fatty acid is in the range from 40 to 100 mol%, preferably in the range from 60 to 100 mol%, particularly preferably in the range from 70 to 100 mol%, with particular preference in the range from 80 to 100 mol% or from 86 to 100 mol%.

5. Polyamide composition according to any of the preceding claims, **characterized in that** the proportion of m-xylylenediamine is in essence 100 mol%.

6. Polyamide composition according to any of the preceding claims, **characterized in that** the proportion of dimeric fatty acid is in the range from 60 to 100 mol% and the proportion of aliphatic or cycloaliphatic diacids is in the range from 0 to 40 mol%, where the other diacid is preferably a diacid selected from the group of adipic acid, azelaic acid, sebacic acid, dodecanedioic acid, tetradecanedioic acid, octadecanedioic acid, cyclohexanedicarboxylic acid, or is a mixture or respective combination thereof.

7. Polyamide composition according to any of the preceding claims, **characterized in that** the other aliphatic or cycloaliphatic diacids are selected from the group of adipic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid, nonadecanedioic acid, cyclohexanedicarboxylic acid and respective combinations and mixtures thereof.

8. Polyamide composition according to any of the preceding claims, **characterized in that**, if small proportions of typically at most 20% by weight of additives are ignored, it consists essentially exclusively of the polyamide based on m-xylylenediamine and on a diacid in the form of a dimeric fatty acid, and also optionally on other aliphatic or cycloaliphatic diamines and/or aliphatic or cycloaliphatic diacids.

9. Polyamide composition according to any of the preceding claims, **characterized in that** its Shore A value is in the range from 45 to 98, preferably in the range from 45 to 95, with particular preference in the range from 50 to 90.

10. Polyamide composition according to any of the preceding claims, **characterized in that** its melting point is in the range from 50 to 240°C, preferably in the range from 50 to 160°C, with particular preference in the range from 90 to 130°C, and/or its glass transition temperature is in the range from 0 to 90°C, preferably in the range from 4 to 70°C, particularly preferably in the range from 6 to 45°C, with particular preference in the range from 8 to 35°C.

11. Polyamide composition according to any of the preceding claims, **characterized in that** its resilience is **characterized by** a residual height of less than 30 mm, preferably of less than 20 mm.

12. Mixture, preferably in the form of a dry blend or of a compounded material, with at least one polyamide composition according to any of the preceding claims, where one or more polymers selected from the group consisting of: PA 6, PA 66, PA 69, PA 610, PA 612, PA 614, PA 618, PA 1010, PA 6/66, PA 6/12, PA 11, PA 12, PA 912, PA 1212, PA MXD6/MXDI, PA 6I/6T, polyesteramides and polyetheramides is/are preferably used as further component of the mixture.

13. Use of a polyamide composition or a mixture according to any of the preceding claims as plasticizer for polymers, in particular polyamides, as hot-melt adhesive, or as adhesion promoter in particular in relation to polyamides, polyester, ionomers or functionalized polyolefins or combinations thereof, or as coating of substrates, preferred substrates being wires, glass fibres, paper, paperboard, textiles and combinations thereof.

14. Use of a polyamide composition or a mixture according to any of Claims 1 to 11 as gasket, housing element, key and/or grip-area for electrical or electronic components, housings or devices, in particular for portable electrical or electronic housings or devices, sports equipment or combinations thereof, or preferably use in a multicomponent injection-moulding process for the production of a gasket, of a housing, of a housing element, of a key and/or of a grip-area for an electrical or electronic component, in particular for a mobile telephone.

## Revendications

1. Composition de polyamide, **caractérisée par** au moins un polyamide sous la forme d'un homo-polyamide ou d'un copolyamide statistique à base de m-xylylène-diamine et d'un diacide sous la forme d'un acide gras dimère, ainsi qu'éventuellement d'autres diamines aliphatiques ou cycloaliphatiques et/ou diacides aliphatiques ou cycloaliphatiques,
la proportion de m-xylylène-diamine se situant dans la plage allant de 50 à 100 % en moles,
la proportion d'acide dimère gras se situant dans la plage allant de 30 à 100 % en moles, et
les proportions de diamines aliphatiques ou cycloaliphatiques se situant dans la plage allant de 0 à 50 % en moles et celles-ci étant choisies dans le groupe constitué par : la triméthylhexaméthylène-diamine, la nonane-diamine, la décane-diamine, l'undécane-diamine, la dodécane-diamine, le bis(aminocyclohexyl)méthane et ses dérivés alkyle, le bis(aminocyclohexyl)propane et ses dérivés alkyle, l'isophorone-diamine, la norbornane-diamine, le bis(aminométhyl)norbornane, la cyclohexane-diamine, le bis(aminométhyl)cyclohexane et ses dérivés alkyle, et leurs combinaisons ou mélanges,
et les proportions d'autres diacides aliphatiques ou cycloaliphatiques se situant dans la plage allant de 0 à 70 % en moles,
à condition que la somme des diamines et des diacides soit à chaque fois de 100 % en moles, et
à condition que le polyamide ne soit pas à base de lactames et/ou de monomères aromatiques, un monomère aromatique étant compris comme un monomère qui comprend deux groupes réactifs, parmi lesquels au moins un des groupes réactifs est un groupe amino et/ou au moins un des groupes réactifs est un groupe acide carboxylique, qui est relié directement à un noyau aromatique,
et à condition que le polyamide soit exempt de séquences polyéther et/ou polyester,
la composition de polyamide présentant un comportement de retour, mesuré sur une éprouvette de traction ISO, norme : ISO/CD 3167, type A1 selon la description, **caractérisé par** une hauteur résiduelle, de moins de 50 mm,
et la composition de polyamide présentant une viscosité relative, mesurée à 20 °C dans une solution à 0,5 % en poids dans du m-crésol, de 1,45 à 1,95.

2. Composition de polyamide selon la revendication 1, **caractérisée en ce que** l'acide gras dimère comprend dans la plage allant de 30 à 50 atomes de carbone, de préférence 36 et/ou 44 atomes de carbone, l'acide gras dimère étant de préférence au moins partiellement, de manière particulièrement préférée entièrement saturé, et/ou présentant de préférence un indice d'acidité dans la plage allant de 145 à 210 mg KOH/g, de manière davantage préférée dans la plage allant de 192 à 200 mg KOH/g.

3. Composition de polyamide selon l'une quelconque des revendications précédentes, **caractérisée en ce que** la proportion de m-xylylène-diamine se situe dans la plage allant de 70 à 100 % en moles, de préférence dans la plage allant de 80 à 100 % en moles, de manière particulièrement préférée dans la plage allant de 90 à 100 % en moles.

4. Composition de polyamide selon l'une quelconque des revendications précédentes, **caractérisée en ce que** la proportion d'acide gras dimère se situe dans la plage allant de 40 à 100 % en moles, de préférence dans la plage allant de 60 à 100 % en moles, de manière particulièrement préférée dans la plage allant de 70 à 100 % en moles, de manière notamment préférée dans la plage allant de 80 à 100 % en moles ou de 86 à 100 % en moles.

5. Composition de polyamide selon l'une quelconque des revendications précédentes, **caractérisée en ce que** la proportion de m-xylylène-diamine constitue essentiellement 100 % en moles.

6. Composition de polyamide selon l'une quelconque des revendications précédentes, **caractérisée en ce que** la proportion d'acide gras dimère se situe dans la plage allant de 60 à 100 % en moles et la proportion d'autres diacides aliphatiques ou cycloaliphatiques se situe dans la plage allant de 0 à 40 % en moles, l'autre diacide étant de préférence un diacide choisi dans le groupe constitué par l'acide adipique, l'acide azélaïque, l'acide sébacique, l'acide dodécane-dioïque, l'acide tétradécane-dioïque, l'acide octadécane-dioïque, l'acide cyclohexane-dicarboxylique ou un mélange ou une combinaison de ceux-ci.

7. Composition de polyamide selon l'une quelconque des revendications précédentes, **caractérisée en ce que** les autres diacides aliphatiques ou cycloaliphatiques sont choisis dans le groupe constitué par : l'acide adipique, l'acide azélaïque, l'acide sébacique, l'acide undécane-dioïque, l'acide dodécane-dioïque, l'acide brassylique, l'acide tétradécane-dioïque, l'acide pentadécane-dioïque, l'acide hexadécane-dioïque, l'acide heptadécane-dioïque, l'acide octadécane-dioïque, l'acide nonadécane-dioïque, l'acide cyclohexane-dicarboxylique ou leurs combinaisons ou mélanges.

8. Composition de polyamide selon l'une quelconque des revendications précédentes, **caractérisée en ce qu'**elle est essentiellement constituée exclusivement du polyamide à base de m-xylylène-diamine et d'un diacide sous la forme d'un acide gras dimère, ainsi qu'éventuellement d'autres diamines aliphatiques ou cycloaliphatiques et/ou diacides aliphatiques ou cycloaliphatiques, à l'exception de petites proportions généralement d'au plus 20 % en poids d'additifs.

9. Composition de polyamide selon l'une quelconque des revendications précédentes, **caractérisée en ce qu'**elle présente une dureté Shore A dans la plage allant de 45 à 98, de préférence dans la plage allant de 45 à 95, de manière particulièrement préférée dans la plage allant de 50 à 90.

10. Composition de polyamide selon l'une quelconque des revendications précédentes, **caractérisée en ce qu'**elle présente un point de fusion dans la plage allant de 50 à 240 °C, de préférence dans la plage allant de 50 à 160 °C, de manière particulièrement préférée dans la plage allant de 90 à 130 °C, et/ou **en ce qu'**elle présente une température de transition vitreuse dans la plage allant de 0 à 90 °C, de préférence dans la plage allant de 4 à 70 °C, de manière particulièrement préférée dans la plage allant de 6 à 45 °C, de manière notamment préférée dans la plage allant de 8 à 35 °C.

11. Composition de polyamide selon l'une quelconque des revendications précédentes, **caractérisée en ce qu'**elle présente un comportement de retour **caractérisé par** une hauteur résiduelle de moins de 30 mm, de préférence de moins de 20 mm.

12. Mélange, de préférence sous la forme d'un mélange sec ou d'une formulation, contenant au moins une composition de polyamide selon l'une quelconque des revendications précédentes, un ou plusieurs polymères choisis dans le groupe constitué par : PA 6, PA 66, PA 69, PA 610, PA 612, PA 614, PA 618, PA 1010, PA 6/66, PA 6/12, PA 11, PA 12, PA 912, PA 1212, PA MXD6/MXDI, PA 6I/6T, les polyester-amides, les polyéther-amides, étant utilisés de préférence en tant que composant supplémentaire du mélange.

13. Utilisation d'une composition de polyamide ou d'un mélange selon l'une quelconque des revendications précédentes en tant que plastifiant pour polymères, notamment polyamides, en tant que colle thermofusible ou en tant que promoteur d'adhésion, notamment pour polyamides, polyesters, ionomères ou polyoléfines fonctionnalisées ou leurs combinaisons, ou en tant que revêtement de substrats ; des fils, des fibres de verre, du papier, du carton, des textiles ou des combinaisons de ceux-ci servant de préférence de substrats.

14. Utilisation d'une composition de polyamide ou d'un mélange selon l'une quelconque des revendications 1 à 11 en tant que joint, élément de boîtier, touche et/ou surface de préhension pour composants électriques ou électroniques, boîtiers ou appareils, notamment pour boîtiers ou appareils électriques ou électroniques portables, appareils de sport ou leurs combinaisons, de préférence utilisation dans un procédé de moulage par injection multicomposant pour la fabrication d'un joint, d'un boîtier, d'un élément de boîtier, d'une touche et/ou d'une surface de préhension pour un composant électrique ou électronique, notamment pour un téléphone portable.
